(19) Europäisches Patentamt / European Patent Office / Office européen des brevets

(11) EP 4 790 083 A1

(12) **EUROPEAN PATENT APPLICATION**
published in accordance with Art. 153(4) EPC

(43) Date of publication:
**12.08.2026 Bulletin 2026/33**

(21) Application number: **24874633.1**

(22) Date of filing: **02.10.2024**

(51) International Patent Classification (IPC):
***C08J 5/18*** *(2006.01)* ***B65D 75/36*** *(2006.01)*
***C08L 23/12*** *(2006.01)* ***C08L 23/14*** *(2006.01)*

(52) Cooperative Patent Classification (CPC):
**B65D 75/36; C08J 5/18; C08L 23/12; C08L 23/14;** Y02W 30/80

(86) International application number:
**PCT/JP2024/035249**

(87) International publication number:
**WO 2025/075032 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.10.2023 JP 2023172268**

(71) Applicant: **Sumitomo Bakelite Co.Ltd.**
**Shinagawa-ku**
**Tokyo 140-0002 (JP)**

(72) Inventor: **KAI, Hideki**
**Tokyo 140-0002 (JP)**

(74) Representative: **Müller-Boré & Partner Patentanwälte PartG mbB**
**Friedenheimer Brücke 21**
**80639 München (DE)**

(54) **RESIN FILM AND PACKAGING**

(57) A resin film including a thermoplastic resin, in which a crystallite size of the thermoplastic resin is 90 Å or more, and a softening point of the resin film is 140°C or lower.

FIG. 1

1a
1
1b

EP 4 790 083 A1

## Description

### TECHNICAL FIELD

The present invention relates to a resin film and a package.

This application claims priority based on Japanese Patent Application No. 2023-172268 filed on October 3, 2023, the contents of which are incorporated herein by reference.

### BACKGROUND ART

A blister pack package (also referred to as a press-through package (PTP)) is widely used for various articles including daily necessities. For example, a blister pack package in which a bottom material including a recess portion and a sheet-like lid material are heat-sealed, and the inside of the recess portion is a storage portion, is used for packaging tablets.

In a blister pack package in which a tablet is stored, a transparent resin film is used as a bottom material, and an aluminum sheet is usually used as a lid material (see Patent Document 1).

Meanwhile, packages made from a resin film are produced and consumed in large quantities every day all over the world due to their high convenience, generating a large amount of waste after use. From the viewpoint of improving the global environment, the generation of such waste has become an important issue to be addressed. In recent years, methods for reducing the amount of waste generated, as well as methods for reusing (recycling) the waste, have been actively studied.

For example, in a case of a resin film consisting of a plurality of layers, when the main constituent materials of resin layers in the plurality of layers are of the same kind, there is no need to separate and reuse the individual resin layers separately, and the entire resin film can be easily reused, thereby increasing usefulness. Therefore, the development of such a resin film consisting of a plurality of layers has been actively promoted.

### Citation List

### Patent Document

Patent Document 1: Japanese Unexamined Patent Application, First Publication No. 2016-124574

### SUMMARY OF INVENTION

### Technical Problem

On the other hand, when viewed on a package unit basis, in a blister pack package used for packaging tablets, it is extremely advantageous to use, as a lid material, a resin film of which a main constituent material is a resin of the same kind as the resin contained in a bottom material, instead of an aluminum sheet in the related art. In such a case, both the lid material and the bottom material can be reused simultaneously. That is, a blister pack package including a lid material containing a resin has extremely high usefulness.

However, in a case where a lid material containing a resin is used, under heat sealing conditions in the related art, seal strength between the lid material and a bottom material is low, and there is a problem in that a blister pack package in which the seal strength between the lid material and the bottom material is sufficiently high cannot be obtained. In addition, when a heat sealing temperature is excessively increased in order to increase the seal strength between the lid material containing a resin and the bottom material, there is a problem in that the lid material or the bottom material is attached to a heating unit used during heat sealing.

An object of the present invention is to provide a resin film that can be used to produce a bottom material containing a resin for forming a blister pack package and that can be used to produce a blister pack package having sufficiently high seal strength through heat sealing between the bottom material and a lid material containing a resin.

### Solution to Problem

In order to solve the above-described problems, the present invention adopts the following configuration.

[1] A resin film including: a thermoplastic resin, in which a crystallite size of the thermoplastic resin is 90 Å or more, and a softening point of the resin film is 140°C or lower.

[2] The resin film according to [1], in which the resin film contains a homopolypropylene and a polypropylene random copolymer as the thermoplastic resin.

[3] The resin film according to [2], in which, in the resin film, a ratio of a content of the polypropylene random copolymer

to a total content of the homopolypropylene and the polypropylene random copolymer is more than 0% by mass and less than 10% by mass, or more than 50% by mass and less than 100% by mass.

[4] The resin film according to any one of [1] to [3], in which the resin film is used as a bottom material of a blister pack package.

[5] A package formed using the resin film according to any one of [1] to [4].

[6] The package according to [5], in which the package is a blister pack package formed by sealing a lid material and a bottom material, the bottom material is a formed body of the resin film, and the lid material contains the same kind of thermoplastic resin as the thermoplastic resin contained in the bottom material.

## Advantageous Effects of Invention

According to the present invention, there is provided a resin film that can be used to produce a bottom material containing a resin for forming a blister pack package and that can be used to produce a blister pack package in which seal strength is sufficiently high by heat sealing between the bottom material and a lid material containing a resin.

## BRIEF DESCRIPTION OF DRAWINGS

[FIG. 1] A cross-sectional view schematically showing an example of a resin film according to an embodiment of the present invention.

[FIG. 2] A perspective view schematically showing an example of a package according to the embodiment of the present invention.

[FIG. 3] A cross-sectional view taken along line III-III of the package shown in FIG. 2.

## DESCRIPTION OF EMBODIMENTS

### <<Resin Film>>

A resin film according to an embodiment of the present invention is a resin film containing a thermoplastic resin, in which a crystallite size of the thermoplastic resin is 90 Å or more, and a softening point of the resin film is 140°C or lower.

In a case where the resin film of the present embodiment contains a thermoplastic resin having a crystallite size (also referred to as a crystallite diameter) in a specific range of 90 Å or more, and the softening point of the resin film itself is in a specific range of 140°C or lower, a blister pack package having sufficiently high seal strength can be produced without excessively increasing a heat sealing temperature when a bottom material is produced using the resin film and the bottom material and a lid material containing a resin are heat-sealed. On the other hand, specifying only one of the crystallite size of the thermoplastic resin and the softening point of the resin film does not result in sufficiently high seal strength.

The resin film of the present embodiment can also be used to form a package other than a blister pack package through heat sealing with another resin film. Even in this case, a package having sufficiently high seal strength can be produced without excessively increasing the heat sealing temperature.

As described above, the resin film of the present embodiment is suitable for forming a package by sealing with the other resin film, and from the viewpoint that the resin film has excellent formability by having the above-described configuration, it is more preferable that the resin film is used as a bottom material of a blister pack package.

In the present specification, unless otherwise specified, the term "resin film" simply refers to the resin film of the present embodiment.

In the resin film of the present embodiment, a ratio of a total content of one or two or more of components described later in the resin film to a total mass of the resin film does not exceed 100% by mass.

Similarly, in a resin composition for forming the resin film, which will be described later, a ratio of a total content of one or two or more of the components described later in the resin composition to a total mass of the resin composition does not exceed 100% by mass.

### <Thermoplastic Resin>

The thermoplastic resin contained in the resin film of the present embodiment is not particularly limited as long as the crystallite size thereof is 90 Å or more.

The thermoplastic resin contained in the resin film may be only one kind or two or more kinds, and in a case of two or more kinds, a combination and a ratio thereof can be optionally selected according to the purpose.

In the present embodiment, in a case where the thermoplastic resin contained in the resin film is only one kind, the

crystallite size of the thermoplastic resin is 90 Å or more.

In a case where the thermoplastic resin contained in the resin film is two or more kinds, a crystallite size of a mixture (in other words, a mixed resin) containing all of the two or more kinds of thermoplastic resins at the same content ratios as in the resin film is 90 Å or more. For example, as will be described later, in a case where the resin film contains, as the thermoplastic resin, a homopolypropylene, a polypropylene random copolymer, and other resins as necessary, a crystallite size of a mixture (mixed resin) containing the homopolypropylene, the polypropylene random copolymer, and the other resins as necessary at the same content ratios as in the resin film is 90 Å or more.

The thermoplastic resin contained in the resin film is preferably a propylene-based resin.

The propylene-based resin is a resin having a constitutional unit derived from propylene, and may be a homopolypropylene (hPP), which is a homopolymer of propylene, or may be a propylene-based copolymer having both a constitutional unit derived from propylene and a constitutional unit derived from a monomer other than propylene.

Preferred examples of the propylene-based copolymer include a polypropylene random copolymer (rPP, propylene random copolymer) such as a propylene-ethylene binary copolymer, a propylene-1-butene-ethylene ternary copolymer, and a propylene-1-butene binary copolymer; and a polypropylene block copolymer (bPP, propylene block copolymer).

The resin film preferably contains, as the thermoplastic resin (propylene-based resin), any one or both of a homopolypropylene and a polypropylene random copolymer, and more preferably contains a homopolypropylene and a polypropylene random copolymer. In particular, in the resin film containing the homopolypropylene and the polypropylene random copolymer, the softening point thereof can be more easily adjusted. Furthermore, the crystallite size of the mixture (thermoplastic resin) of these propylene-based resins can be more easily adjusted.

More specifically, by increasing a content of the homopolypropylene in the resin film, the crystallite size of the thermoplastic resin (the mixture of the homopolypropylene and the polypropylene random copolymer) tends to be easily increased.

On the other hand, by increasing a content of the polypropylene random copolymer in the resin film, the softening point of the resin film tends to be more easily lowered.

However, in the present embodiment, methods of adjusting the crystallite size of the thermoplastic resin and the softening point of the resin film are not limited thereto.

A melt flow rate (may be referred to as "MFR" in the present specification) of the homopolypropylene (hPP) is preferably 0.5 to 15 g/10 min, and may be, for example, any of 0.5 to 6 g/10 min, 4 to 11 g/10 min, and 9 to 15 g/10 min.

A melt flow rate (MFR) of the polypropylene random copolymer (rPP) is preferably 0.5 to 15 g/10 min, and may be, for example, any of 0.5 to 6 g/10 min, 4 to 11 g/10 min, and 9 to 15 g/10 min.

A melt flow rate (MFR) of the polypropylene block copolymer (bPP) is preferably 0.5 to 15 g/10 min, and may be, for example, any of 0.5 to 6 g/10 min, 4 to 11 g/10 min, and 9 to 15 g/10 min.

All of the melt flow rates of the above-described homopolypropylene, polypropylene random copolymer, and polypropylene block copolymer are preferably values in a case where a heating temperature of these resins is 230°C.

In the present specification, the melt flow rate (MFR) refers to a value obtained by measurement in accordance with JIS K 7210-1:2014, unless otherwise specified.

In a case where the resin film includes homopolypropylene and a polypropylene random copolymer, a ratio of the content of the polypropylene random copolymer to a total content of the homopolypropylene and the polypropylene random copolymer in the resin film ([Content of polypropylene random copolymer in resin film (parts by mass)]/([Content of homopolypropylene in resin film (parts by mass)] + [Content of polypropylene random copolymer in resin film (parts by mass)]) × 100) is preferably more than 0% by mass and less than 10% by mass or more than 50% by mass and less than 100% by mass. When the ratio is within such a range, the crystallite size of the thermoplastic resin (the mixture of the homopolypropylene and the polypropylene random copolymer) can be more easily increased, and the softening point of the resin film can be more easily lowered.

The ratio is usually the same as a ratio of a content of a polypropylene random copolymer to a total content of a homopolypropylene and the polypropylene random copolymer in a resin composition described later ([Content of polypropylene random copolymer in resin composition (parts by mass)]/([Content of homopolypropylene in resin composition (parts by mass)] + [Content of polypropylene random copolymer in resin composition (parts by mass)]) × 100).

In other words, in the resin film, a ratio of the content of the homopolypropylene to the total content of the homopolypropylene and the polypropylene random copolymer ([Content of homopolypropylene in resin film (parts by mass)]/([Content of homopolypropylene in resin film (parts by mass)] + [Content of polypropylene random copolymer in resin film (parts by mass)]) × 100) is preferably 10% to 50% by mass.

In the resin film, the ratio of the content of the polypropylene random copolymer to the total content of the homopolypropylene and the polypropylene random copolymer may be, for example, any of 1% to 9% by mass, 1% to 6.5% by mass, 3.5% to 9% by mass, and 3.5% to 6.5% by mass, or may be, for example, any of 51% to 99% by mass, 51% to 85% by mass, 51% to 75% by mass, 65% to 99% by mass, 75% to 99% by mass, and 65% to 85% by mass. Provided that this is

an example of the ratio.

In a case where the resin film contains a propylene-based resin, a ratio of a content of the propylene-based resin to a content of the thermoplastic resin in the resin film ([Content of propylene-based resin in resin film (parts by mass)]/[Content of thermoplastic resin in resin film (parts by mass)] × 100) is preferably 80% by mass or more, and may be, for example, any of 85% by mass or more, 90% by mass or more, 95% by mass or more, 97% by mass or more, and 99% by mass or more. When the ratio is equal to or more than the lower limit, the softening point of the resin film can be more easily lowered.

On the other hand, the ratio is 100% by mass or less.

The ratio is usually the same as a ratio of a content of a propylene-based resin to a content (parts by mass) of a thermoplastic resin in the resin composition described later ([Content of propylene-based resin in resin composition (parts by mass)]/[Content of thermoplastic resin in resin composition (parts by mass)] × 100).

<Other Components>

The resin film according to the present embodiment may or may not contain other components in addition to the thermoplastic resin, within a range in which the effects of the present invention are not impaired.

The other components may be any of a resin component (may be referred to as "the other resin component" in the present specification) and a non-resin component (may be referred to as "the other non-resin component" in the present specification).

Examples of the other non-resin component include additives known in the art.

Examples of the additives include an antifogging agent, an antiblocking agent, an antioxidant, an antistatic agent, a crystal nucleating agent, inorganic particles, a viscosity reducing agent, a thickening agent, a thermal stabilizer, a lubricant, an infrared absorber, an ultraviolet absorber, and a colorant (for example, a dye or a pigment).

The other components contained in the resin film may be only one kind or two or more kinds, and in a case of two or more kinds, a combination and a ratio thereof can be optionally selected according to the purpose.

In the resin film, a ratio of the content of the thermoplastic resin to the total mass of the resin film ([Content of thermoplastic resin in resin film (parts by mass)]/[Total mass of resin film (parts by mass)] × 100) is preferably 80% by mass or more, and may be, for example, any of 85% by mass or more, 90% by mass or more, 95% by mass or more, 97% by mass or more, and 99% by mass or more. When the ratio is equal to or more than the lower limit, characteristics of the resin film that can be used to form a package (for example, a bottom material that can be used to form a blister pack package) are further improved.

On the other hand, the above-described ratio is 100% by mass or less.

The ratio is usually the same as a ratio of the content of the thermoplastic resin to a total content (parts by mass) of components that do not vaporize at room temperature in the resin composition described later ([Content of thermoplastic resin in resin composition (parts by mass)]/[Total content of components in resin composition that do not vaporize at room temperature (parts by mass)] × 100).

In other words, in the resin film, a ratio of a content of the other components to the total mass of the resin film ([Content of other components in resin film (parts by mass)]/[Total mass of resin film (parts by mass)] × 100) is preferably 20% by mass or less, and may be, for example, any of 15% by mass or less, 10% by mass or less, 5% by mass or less, 3% by mass or less, and 1% by mass or less. On the other hand, the ratio of the content of the other components is 0% by mass or more.

In the present specification, the term "room temperature" means a temperature that is not particularly cooled or heated, that is, a normal temperature, and examples thereof include a temperature of 15°C to 25°C.

The resin film containing a propylene-based resin may or may not contain, as a component other than the propylene-based resin, one or two or more selected from the group consisting of a thermoplastic resin that does not correspond to the propylene-based resin, the other resin component, and the other non-resin component.

In a case where the resin film contains the component other than the propylene-based resin, the thermoplastic resin that does not correspond to the propylene-based resin, the other resin component, and the other non-resin component, which are contained in the resin film, may be only one kind or two or more kinds, and in a case of two or more kinds, a combination and a ratio thereof can be optionally selected according to the purpose.

Examples of a resin component corresponding to any of the thermoplastic resin that does not correspond to the propylene-based resin and the other resin component include a petroleum resin and a styrene-isobutylene-styrene block copolymer.

<Crystallite Size of Thermoplastic Resin>

The crystallite size of the thermoplastic resin contained in the resin film is 90 Å or more. When a bottom material is produced using such a resin film and the bottom material and a lid material containing a resin are heat-sealed, a blister pack

package having sufficiently high seal strength can be produced. The reason for this is not clear, but is presumed as follows.

That is, when the bottom material and the lid material are heat-sealed, under heating conditions, the thermoplastic resin in the bottom material and the resin (thermoplastic resin) in the lid material are melted and mutually diffuse to be mixed with each other, and then, when the obtained sealed body is cooled, these resins harden in a state of being mixed with each other. In this case, since the crystallite size of the thermoplastic resin in the bottom material (derived from the resin film) is large, in a sealed area, at least some of aggregates of the thermoplastic resin derived from the bottom material remain in a state of having a relatively large size, and even in a case where an external force for peeling off the bottom material and the lid material is applied to the sealed area, a state where the thermoplastic resin derived from the bottom material tends to remain in a state of being surrounded by the resin derived from the lid material. As a result, it is presumed that the seal strength between the bottom material and the lid material is sufficiently high.

Such an effect is exhibited not only in the blister pack package but also in a package other than the blister pack package, which is formed by heat-sealing the resin film and the other resin film.

From the viewpoint of further enhancing the above-described effect, the crystallite size of the thermoplastic resin is preferably 90 to 205 Å, and may be, for example, any of 90 to 190 Å, 90 to 160 Å, and 90 to 130 Å, any of 105 to 205 Å, 135 to 205 Å, and 165 to 205 Å, or 105 to 190 Å. However, these are examples of the crystallite size of the thermoplastic resin.

The crystallite size of the thermoplastic resin is determined by a known method.

For example, the crystallite size of the thermoplastic resin can be calculated by analyzing a film containing the thermoplastic resin by an X-ray diffraction method using Scherrer's equation:

$$D = K\lambda/(\beta\cos\theta)$$

(In the equation, D is a crystallite size; $\beta$ is a peak half-width of a measurement surface; $\lambda$ is a wavelength of X-rays; $\theta$ is a Bragg angle of the measurement surface; and K is a Scherrer constant.)

The film containing the thermoplastic resin, which is subjected to the analysis by the X-ray diffraction method, is preferably a film having a higher content of the thermoplastic resin, and more preferably a film consisting of (containing only) the thermoplastic resin, and the resin film of the present embodiment itself may be subjected to the analysis.

The crystallite size of the thermoplastic resin can be adjusted, for example, by adjusting a molecular weight of the thermoplastic resin, a degree of branching of molecules, or a copolymerization ratio of monomers; the addition of a nucleating agent to the thermoplastic resin; or a thermal history such as a cooling rate when the thermoplastic resin is cooled from a molten state, a temperature at the end of cooling, or a holding time at any temperature during cooling.

<Softening Point of Resin Film>

The softening point (also referred to as a softening temperature) of the resin film is 140°C or lower. When a bottom material is produced using such a resin film and the bottom material and a lid material containing a resin are heat-sealed, a blister pack package having sufficiently high seal strength can be produced. The reason for this is that, in a case where the softening point of the resin film is equal to or less than the specific value, the bottom material is favorably melted to an appropriate degree when the bottom material and the lid material are heat-sealed, and the thermoplastic resin in the bottom material and the resin (thermoplastic resin) in the lid material are favorably mixed with each other.

Such an effect is exhibited not only in the blister pack package but also in a package other than the blister pack package, which is formed by heat-sealing the resin film and the other resin film.

From the viewpoint of further enhancing the above-described effect, the softening point of the resin film is preferably 70°C to 140°C, and may be, for example, any of 70°C to 125°C and 70°C to 110°C, any of 90°C to 140°C, 105°C to 140°C, and 120°C to 140°C, or 90°C to 125°C. However, these are examples of the softening point of the resin film.

The softening point of the resin film can be adjusted by adjusting the kind of the thermoplastic resin contained in the resin film and the content of the thermoplastic resin in the resin film. In particular, the softening point of the resin film can be easily reduced by increasing the content of a thermoplastic resin that has a low density, is a copolymer, or is an elastomer component.

<Other Configurations of Resin Film>

The resin film may consist of one layer (single layer) or may consist of a plurality of layers of two or more layers. In a case where the resin film consists of a plurality of layers, the plurality of layers may be the same as or different from each other, and a combination of the plurality of layers is not particularly limited as long as the effects of the present invention are not impaired.

In the present specification, the expression "the plurality of layers may be the same as or different from each other" is not limited to the case of the resin film, and means that "all the layers may be the same as each other, all the layers

may be different from each other, or only some of the layers may be the same as each other". Further, the expression "the plurality of layers are different from each other" means that "at least one of a constituent material and a thickness of each layer is different".

A thickness of the resin film is not particularly limited, but is preferably 100 to 400 μm, and may be, for example, any of 200 to 400 μm and 250 to 400 μm, any of 100 to 350 μm and 100 to 300 μm, or any of 200 to 350 μm and 250 to 300 μm.

Here, the "thickness of the resin film" means a thickness of the entire resin film, and for example, the thickness of the resin film consisting of a plurality of layers means a total thickness of all the layers constituting the resin film.

The resin film according to the present embodiment may or may not include, on one surface or both surfaces thereof, another layer or another film that does not correspond to the resin film, within a range in which the effects of the present invention are not impaired.

The other layer or the other film in the resin film can be optionally selected according to the purpose, and is not particularly limited as long as the other layer or the other film is not a metal sheet.

A thickness of the other layer or the other film in the resin film can also be selected optionally according to the purpose, and is not particularly limited.

In the present specification, unless otherwise specified, the "metal sheet" is a sheet containing a metal as a main component, and means a sheet in which a ratio of a content of the metal to a total mass of the metal sheet is 90% to 100% by mass.

The metal constituting the metal sheet may be a simple metal such as aluminum, or may be an alloy of two or more metals.

The other layer or the other film may be provided on the entire surface of one surface or both surfaces of the resin film, or may be provided only in a partial region. In the resin film, whether or not the other layer or the other film is provided on the entire surface of the surface on which the other layer or the other film is to be formed can be optionally selected according to the kind of the other layer or the other film.

The other layer or the other film provided only in a partial region of one surface or both surfaces of the resin film may be patterned or unpatterned, and may form, for example, characters.

A preferred example of the other layer in the resin film include a printed layer.

The other layer or the other film in the resin film may consist of one layer (single layer) or may consist of a plurality of layers of two or more layers. In a case where the other layer or the other film consists of a plurality of layers, the plurality of layers may be the same as or different from each other, and a combination of the plurality of layers is not particularly limited as long as the effects of the present invention are not impaired.

It is preferable that, among the surfaces of the resin film that serve as heat-sealing surfaces with the other resin film described later (for example, a lid material), at least a heat-sealing portion does not include the other layer or the other film.

It is more preferable that the entire surface of the resin film that serves as the heat-sealing surface does not include the other layer or the other film. That is, it is more preferable that at least one surface of the resin film does not include the other layer or the other film.

The resin film is preferably a non-stretched film. The resin film which is a non-stretched film has higher formability.

<Example of Resin Film>

A preferred example of the resin film of the present embodiment includes a resin film containing a thermoplastic resin, in which

a crystallite size of the thermoplastic resin is 90 Å or more,
a softening point of the resin film is 140°C or lower,
the resin film contains a propylene-based resin as the thermoplastic resin,
in the resin film, a ratio of a content of the thermoplastic resin to a total mass of the resin film is 80% by mass or more, and
in the resin film, a ratio of a content of the propylene-based resin to the content of the thermoplastic resin is 80% by mass or more.

A more preferred example of the resin film of the present embodiment includes a resin film containing a thermoplastic resin, in which

a crystallite size of the thermoplastic resin is 90 Å or more,
a softening point of the resin film is 140°C or lower,
the resin film contains a homopolypropylene and a polypropylene random copolymer as the thermoplastic resin,

in the resin film, a ratio of a content of the thermoplastic resin to a total mass of the resin film is 80% by mass or more, in the resin film, a ratio of a total content of the homopolypropylene and the polypropylene random copolymer to the content of the thermoplastic resin (([Content of homopolypropylene in resin film (parts by mass)] + [Content of polypropylene random copolymer in resin film (parts by mass)])/[Content of thermoplastic resin in resin film (parts by mass)] $\times$ 100) is 80% by mass or more, and
in the resin film, a ratio of a content of the polypropylene random copolymer to the total content of the homopolypropylene and the polypropylene random copolymer is more than 0% by mass and less than 10% by mass or more than 50% by mass and less than 100% by mass.

Hereinafter, the present invention will be described with reference to the drawings.
In the drawings used in the following description, main parts may be enlarged for convenience to facilitate understanding of the features of the present invention, and dimensional ratios of each constituent element may not be the same as actual ratios.

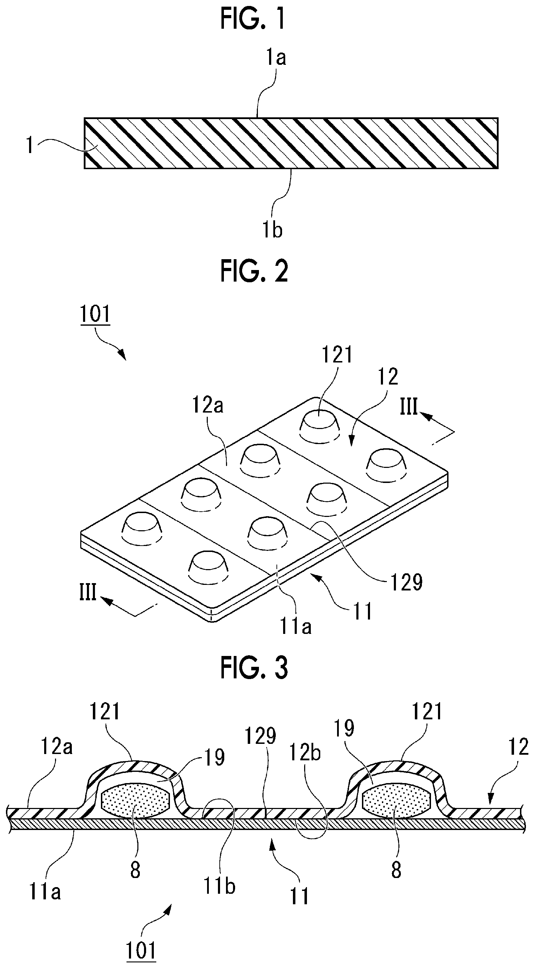

FIG. 1 is a cross-sectional view schematically showing an example of the resin film of the present embodiment.
A resin film 1 shown here contains a thermoplastic resin having a crystallite size of 90 Å or more. A softening point of the resin film 1 is 140°C or lower.
Any one of one surface (in the present specification, may be referred to as a "first surface") 1a and the other surface (in the present specification, may be referred to as a "second surface") 1b of the resin film 1 is a heat-sealing surface with another resin film (for example, a lid material for constituting a blister pack package).

<<Method of Producing Resin Film>>

Among the resin films of the present embodiment, a resin film consisting of a single layer can be produced, for example, by extrusion-molding a resin, a resin composition, or the like serving as a forming material thereof.
The resin composition may be produced by adjusting types and contents of the components contained therein such that the resin film to be formed contains desired components in desired contents. For example, a ratio between contents of components that do not vaporize at room temperature in the resin composition is usually the same as a ratio between contents of components in a resin film formed from the resin composition.
In a case of using the resin composition, for example, a blend (a dry blend material or a non-kneaded material) of two or more components may be directly fed into an extruder as the resin composition, or a pre-kneaded material obtained by kneading two or more components in advance may be fed into the extruder as the resin composition.
The pre-kneaded material is obtained, for example, by melt-kneading two or more components using a device such as a twin-screw extruder or a Banbury mixer.
Examples of the resin composition include a resin composition containing the thermoplastic resin and other components as necessary. The other components are the components described above.
Preferred examples of the resin composition include a resin composition containing a propylene-based resin, a thermoplastic resin that does not correspond to the propylene-based resin as necessary, the other resin component as necessary, and the other non-resin component as necessary.
Among the resin films of the present embodiment, a resin film consisting of a plurality of layers can be produced, for example, by a feed block method in which a resin, a resin composition, or the like serving as a forming material of each layer is melt-extruded using a plurality of extruders, a co-extrusion T-die method such as a multi-manifold method, or an air-cooled or water-cooled co-extrusion inflation method.
In a case of producing the resin film consisting of a plurality of layers, the resin composition can be prepared and handled in the same manner as in a case of producing the resin film consisting of a single layer.
The resin film consisting of a plurality of layers can also be produced by separately preparing two or more single-layer films for constituting any two or more of the layers in advance, bonding and laminating these single-layer films using a thermal (heat) lamination method or the like without using an adhesive, and further laminating films other than these films as necessary to achieve a target disposition form.

<<Package>>

A package according to an embodiment of the present invention is formed of the resin film according to the embodiment of the present invention described above.
The package of the present embodiment is formed by heat-sealing the resin film to another resin film, and therefore has sufficiently high seal strength. In addition, since the user of the resin film eliminates the need to excessively increase the heat sealing temperature during the production of the package, for example, it is possible to suppress problems such as the resin film or the other resin film adhering to a heating unit during heat sealing.
In the package of the present embodiment, the resin film may or may not be further formed after the production,

but it is preferable that the resin film is formed.

A thickness of a formed body of the resin film may be, for example, the same as the thickness of the above-described resin film.

In the other resin film, a ratio of a total content of one or two or more of the following components contained in the other resin film to a total mass of the other resin film does not exceed 100% by mass.

Similarly, in another resin composition for forming the other resin film, which will be described later, a ratio of a total content of one or two or more of the following components contained in the other resin composition to a total mass of the other resin composition does not exceed 100% by mass.

The other resin film contains a thermoplastic resin.

Examples of the thermoplastic resin contained in the other resin film include the same thermoplastic resin as the thermoplastic resin contained in the resin film.

More specifically, the thermoplastic resin contained in the other resin film is preferably a propylene-based resin, and the propylene-based resin may be a homopolypropylene (hPP), or may be a propylene-based copolymer such as a polypropylene random copolymer (rPP, propylene random copolymer) such as a propylene-ethylene binary copolymer, a propylene-1-butene-ethylene terpolymer, or a propylene-1-butene binary copolymer, or a polypropylene block copolymer (bPP, propylene block copolymer).

The thermoplastic resin contained in the other resin film may be the same as or different from the thermoplastic resin contained in the resin film.

The thermoplastic resin contained in the other resin film may be only one kind or two or more kinds, and in a case of two or more kinds, a combination and a ratio thereof can be optionally selected according to the purpose.

The other resin film may or may not contain other components in addition to the thermoplastic resin, within a range in which the effects of the present invention are not impaired.

The other components contained in the other resin film may be any of a resin component (may be referred to as "the other resin component" in the present specification) and a non-resin component (may be referred to as "the other non-resin component" in the present specification).

Examples of the other resin component and the other non-resin component contained in the other resin film include the same as the other resin component and the other non-resin component contained in the resin film.

The other components contained in the other resin film may be only one kind or two or more kinds, and in a case of two or more kinds, a combination and a ratio thereof can be optionally selected according to the purpose.

In the other resin film, a ratio of a content of the thermoplastic resin to the total mass of the other resin film ([Content of thermoplastic resin in the other resin film (parts by mass)]/[Total mass of the other resin film (parts by mass)] × 100) is preferably 80% by mass or more, and may be, for example, any of 85% by mass or more, 90% by mass or more, 95% by mass or more, 97% by mass or more, and 99% by mass or more. When the ratio is equal to or more than the lower limit, characteristics of the other resin film that can be used to form a package (for example, a lid material that can be used to form a blister pack package) are further improved.

On the other hand, the above-described ratio is 100% by mass or less.

The ratio is usually the same as a ratio of the content of the thermoplastic resin to a total content (parts by mass) of components that do not vaporize at room temperature in the other resin composition described later ([Content of thermoplastic resin in the other resin composition (parts by mass)]/[Total content of components that do not vaporize at room temperature in the other resin composition (parts by mass)] × 100).

In other words, in the other resin film, a ratio of the content of the other components to the total mass of the other resin film ([Content of other components in the other resin film (parts by mass)]/[Total mass of the other resin film (parts by mass)] × 100) is preferably 20% by mass or less, and may be, for example, any of 15% by mass or less, 10% by mass or less, 5% by mass or less, 3% by mass or less, and 1% by mass or less. On the other hand, the ratio of the content of the other components is 0% by mass or more.

In a case where the other resin film contains a propylene-based resin, a ratio of a content of the propylene-based resin to the content of the thermoplastic resin in the other resin film ([Content of propylene-based resin in the other resin film (parts by mass)]/[Content of thermoplastic resin in the other resin film (parts by mass)] × 100) is preferably 80% by mass or more, and may be, for example, any of 85% by mass or more, 90% by mass or more, 95% by mass or more, 97% by mass or more, and 99% by mass or more.

On the other hand, the above-described ratio is 100% by mass or less.

The ratio is usually the same as a ratio of a content of a propylene-based resin to a content (parts by mass) of a thermoplastic resin in the other resin composition described later ([Content of propylene-based resin in the other resin composition (parts by mass)]/[Content of thermoplastic resin in the other resin composition (parts by mass)] × 100).

The other resin film is preferably a biaxially stretched film. When the other resin film which is a biaxially stretched film is used, a package having high moistureproof properties and a high effect of suppressing deterioration of the contents can be formed. In addition, since the other resin film has higher heat resistance, an effect of suppressing sticking of the other resin film to a heating unit such as a sealing roll during heat sealing with the resin film is further enhanced. Further,

since the other resin film has low tearing strength within an appropriate range, when the blister pack package is formed, it is easy to control the ease with which a tablet can be removed from the blister pack package.

In the package of the present embodiment, the other resin film may be further formed or may not be formed after the production.

The other resin film may consist of one layer (single layer) or may consist of a plurality of layers of two or more layers. In a case where the other resin film consists of a plurality of layers, the plurality of layers may be the same as or different from each other, and a combination of the plurality of layers is not particularly limited as long as the effects of the present invention are not impaired.

A thickness of the other resin film is not particularly limited, but is, for example, preferably 10 to 100 μm.

Here, the "thickness of the other resin film" means a thickness of the entire other resin film, and for example, the thickness of the other resin film consisting of a plurality of layers means a total thickness of all the layers constituting the other resin film.

In the package of the present embodiment, it is preferable that the resin film and the other resin film contain the same kind of thermoplastic resin. In such a package, the seal strength between the resin film and the other resin film is sufficiently high. Further, since the resin film and the other resin film contain the same kind of resin as a main constituent material, these resin films can be reused at the same time, and the usefulness of such a package is extremely high.

In the package of the present embodiment, the term "same kind of resin" is not limited to a case of a thermoplastic resin, and means that, when resins having a common constitutional unit are compared, a ratio of an amount (mol) of the common constitutional unit to a total amount (mol) of the constitutional unit in both resins is 20 mol% or more.

For example, in a case of a polyolefin-based resin (resin having a constitutional unit derived from an olefin), low-density polyethylene (LDPE), linear low-density polyethylene (LLDPE), metallocene-catalyzed linear low-density polyethylene (mLLDPE), high-density polyethylene (HDPE), an ethylene-methyl acrylate copolymer (EMA), an ethylene-methyl methacrylate copolymer (EMMA), an ethylene-ethyl acrylate copolymer (EEA), an ethylene-acrylic acid copolymer (EAA), an ethylene-methacrylic acid copolymer (EMAA), an ethylene-ethyl acrylate-maleic anhydride copolymer (E-EA-MAH), an ethylene-vinyl alcohol copolymer (EVOH), an ethylene-vinyl acetate copolymer (EVA), and an ethylene-vinyl alcohol-vinyl acetate copolymer (partially saponified EVA) all have a ratio of an amount (mol) of a constitutional unit derived from ethylene of 20 mol% or more to a total amount (mol) of the constitutional unit, and are therefore considered to be of the same kind. On the other hand, for example, among a polypropylene random copolymer (rPP), a polypropylene block copolymer (bPP), and the like, resins in which a ratio of an amount (mol) of a constitutional unit derived from ethylene to a total amount (mol) of the constitutional unit is less than 20 mol% are not considered to be of the same kind as the above-described low-density polyethylene or the like.

For example, a homopolypropylene (hPP), a propylene-ethylene binary copolymer, a propylene-1-butene-ethylene ternary copolymer, a propylene-1-butene binary copolymer, and a polypropylene block copolymer all have a ratio of an amount (mol) of a constitutional unit derived from propylene of 20 mol% or more to a total amount (mol) of the constitutional unit, and are therefore considered to be of the same kind.

In the present embodiment, in each of the resins of the same kind, a ratio of the amount (mol) of the common constitutional unit to the total amount (mol) of the constitutional unit is preferably 30 mol% or more, more preferably 40 mol% or more, and even more preferably 50 mol% or more, and may be, for example, any of 60 mol% or more, 70 mol% or more, and 80 mol% or more. In addition, in each of the resins of the same kind, the ratio is 100 mol% or less.

The other resin film may or may not include, on one surface or both surfaces thereof, another layer or another film that does not correspond to the other resin film, within a range in which the effects of the present invention are not impaired.

The other layer or the other film in the other resin film can be optionally selected according to the purpose, and is not particularly limited as long as the other layer or the other film is not a metal sheet.

A thickness of the other layer or the other film in the other resin film can also be optionally selected according to the purpose, and is not particularly limited.

The other layer or the other film may be provided on the entire surface of one surface or both surfaces of the other resin film, or may be provided only in a partial region. In the other resin film, whether or not the other layer or the other film is provided on the entire surface of the surface on which the other layer or the other film is to be formed can be optionally selected according to the type of the other layer or the other film.

The other layer or the other film provided only in a partial region of one surface or both surfaces of the other resin film may be patterned or unpatterned, and may form, for example, characters.

Examples of the other layer or the other film provided in the other resin film include the same as the other layer or the other film provided in the above-described resin film.

A preferred example of the other layer in the other resin film includes a printed layer.

The other layer or the other film in the other resin film may consist of one layer (single layer) or may consist of a plurality of layers of two or more layers. In a case where the other layer or the other film consists of a plurality of layers, the plurality of layers may be the same as or different from each other, and a combination of the plurality of layers is not particularly limited as long as the effects of the present invention are not impaired.

It is preferable that, among the surfaces of the other resin film that serve as heat-sealing surfaces with the resin film described later (for example, a bottom material), at least a heat-sealing portion does not include the other layer or the other film.

In the resin film, a ratio of a content of a thermoplastic resin of the same kind as the thermoplastic resin contained in the other resin film to a total mass of the resin film is preferably 80% to 100% by mass, more preferably 90% to 100% by mass, and may be, for example, any of 95% to 100% by mass and 99% to 100% by mass. When the ratio is equal to or more than the lower limit, reusability of the package is further enhanced.

In the other resin film, a ratio of a content of a thermoplastic resin of the same kind as the thermoplastic resin contained in the resin film to a total mass of the other resin film is preferably 80% to 100% by mass, more preferably 90% to 100% by mass, and may be, for example, any of 95% to 100% by mass and 99% to 100% by mass. When the ratio is equal to or more than the lower limit, the reusability of the package is further enhanced.

The seal strength of the package of the present embodiment can be determined, for example, by a peel strength of a test piece prepared by heat-sealing the resin film and the other resin film.

For example, in a case where a test piece having a width of 15 mm, which is obtained by heat-sealing the resin film and the other resin film under conditions of a sealing temperature of 140°C, a sealing time of 0.5 seconds, and a sealing pressure of 0.45 MPa (4.6 kgf/cm$^2$), is used, the other resin film is peeled off from the resin film (that is, 180° peeling is performed) at a peeling speed of 200 mm/min such that sealing surfaces of the resin film and the other resin film form an angle of 180° in the test piece, and a peel strength at this time is measured, the peel strength is preferably 7 N/15 mm or more, and may be, for example, any of 12 N/15 mm or more and 17 N/15 mm or more.

On the other hand, a package having a peel strength of 25 N/15 mm or less can be more easily realized.

The package of the present embodiment is preferably a blister pack package.

A more preferred example of the package of the present embodiment includes a blister pack package formed by sealing a lid material and a bottom material, in which the bottom material is a formed body of the resin film.

The lid material in the blister pack package in the related art is usually an aluminum sheet; however, in the present embodiment, by using a bottom material that contains the thermoplastic resin and does not include a metal sheet and a lid material that contains the thermoplastic resin and does not include a metal sheet, the reusability of the produced blister pack package can be improved.

Among these, a more preferred example of the package of the present embodiment includes a blister pack package formed by sealing a lid material and a bottom material, in which the bottom material is a formed body of the resin film, and the lid material contains a thermoplastic resin of the same kind as the thermoplastic resin contained in the bottom material. In such a blister pack package, the seal strength between the bottom material and the lid material is sufficiently high. Furthermore, since the bottom material and the lid material contain the same kind of resin as a main constituent material, the bottom material and the lid material can be reused at the same time, and the usefulness of such a blister pack package is extremely high.

Hereinafter, as a package formed by heat-sealing the resin film and the other resin film, a blister pack package formed by heat-sealing the above-described bottom material (corresponding to the formed body of the resin film) and the lid material (corresponding to the other resin film) will be taken as an example to describe this blister pack package in more detail.

The thermoplastic resin contained in the bottom material and the other component other than the thermoplastic resin are the same as the thermoplastic resin contained in the resin film and the other component other than the thermoplastic resin, respectively. In addition, an aspect in which the bottom material contains the thermoplastic resin and the other component is the same as an aspect in which the resin film contains the thermoplastic resin and the other component.

In the bottom material, a ratio of a content of the thermoplastic resin (total content of the thermoplastic resin of the same kind as the thermoplastic resin contained in the lid material and the thermoplastic resin of a different kind from the thermoplastic resin contained in the lid material) to the total mass of the bottom material is the same as the ratio of the content of the thermoplastic resin to the total mass of the resin film, which is described above.

In the bottom material, a ratio of a content of the thermoplastic resin of the same kind as the thermoplastic resin contained in the lid material to the total mass of the bottom material is the same as the ratio of the content of the thermoplastic resin of the same kind as the thermoplastic resin contained in the other resin film to the total mass of the resin film, which is described above.

A thickness of the bottom material is the same as the thickness of the resin film described above.

The thermoplastic resin contained in the lid material and the other component other than the thermoplastic resin are the same as the thermoplastic resin contained in the other resin film and the other component other than the thermoplastic resin, respectively. In addition, an aspect in which the lid material contains the thermoplastic resin and the other component is the same as an aspect in which the other resin film contains the thermoplastic resin and the other component.

In the lid material, a ratio of a content of the thermoplastic resin (total content of the thermoplastic resin of the

same kind as the thermoplastic resin contained in the bottom material and the thermoplastic resin of a different kind from the thermoplastic resin contained in the bottom material) to the total mass of the lid material is the same as the ratio of the content of the thermoplastic resin to the total mass of the other resin film, which is described above.

In the lid material, a ratio of a content of the thermoplastic resin of the same kind as the thermoplastic resin contained in the bottom material to the total mass of the lid material is the same as the ratio of the content of the thermoplastic resin of the same kind as the thermoplastic resin contained in the resin film to the total mass of the other resin film, which is described above.

A thickness of the lid material is not particularly limited, but is preferably 10 to 100 μm, and may be, for example, any of 10 to 70 μm and 10 to 40 μm, any of 20 to 100 μm and 50 to 100 μm, or any of 20 to 70 μm and 20 to 40 μm.

The seal strength of the blister pack package of the present embodiment can be determined by the peel strength of the test piece, as in the case of the seal strength of the package described above.

FIG. 2 is a perspective view schematically showing an example of the blister pack package of the present embodiment. FIG. 3 is a cross-sectional view taken along line III-III of the blister pack package shown in FIG. 2.

In FIG. 2 and subsequent figures, the same constituent elements as those illustrated in the figures that have already been described will be denoted by the same reference numerals as those used in the figures that have been described, and further detailed description thereof will not be repeated.

A blister pack package 101 shown here is configured to include a lid material 11 and a bottom material 12.

Both the lid material 11 and the bottom material 12 contain a thermoplastic resin.

The bottom material 12 is a formed body of the resin film according to the embodiment of the present invention described above, and may be, for example, a formed body of the resin film 1 shown in FIG. 1.

A crystallite size of the thermoplastic resin contained in the bottom material 12 is 90 Å or more.

A softening point of the bottom material 12 is 140°C or lower.

The blister pack package 101 having these characteristics has sufficiently high seal strength.

The bottom material 12 is provided with a plurality of recess portions 121 that protrude toward one surface (in the present specification, may be referred to as a "first surface") 12a and have an opening portion on the other surface (in the present specification, may be referred to as a "second surface") 12b. In the blister pack package 101, the bottom material 12 is disposed with the second surface 12b facing the lid material 11, and the first surface 12a forms one outermost surface of the blister pack package 101.

On the other hand, one surface (in the present specification, may be referred to as a "first surface") 11a of the lid material 11 forms the other outermost surface of the blister pack package 101, and in the blister pack package 101, the lid material 11 is disposed with the other surface (in the present specification, may be referred to as a "second surface") 11b facing the bottom material 12.

In the blister pack package 101, the second surface 11b of the lid material 11 and a region of the second surface 12b of the bottom material 12 where the recess portion 121 is not provided are sealed, and a region of the second surface 12b of the bottom material 12 where the recess portion 121 is provided is not sealed with the second surface 11b of the lid material 11. In this region, a storage portion 19 is formed by the second surface 12b of the bottom material 12 and the second surface 11b of the lid material 11. The storage portion 19 of the blister pack package 101 stores a storage item 8 in a sealed manner.

In the present specification, a region of the bottom material, which forms a storage portion (in a case of the blister pack package 101, the storage portion 19) of the blister pack package, may be referred to as a "recess portion" when viewed from a second surface side of the bottom material (in a case of the bottom material 12, second surface 12b side), and may be referred to as a "protruding portion" when viewed from a first surface side of the bottom material (in a case of the bottom material 12, first surface 12a side).

A slit 129 is formed on the first surface 12a side of the bottom material 12.

More specifically, in the bottom material 12, a plurality of the slits 129 are formed in parallel to one another in a width direction of the blister pack package 101. Each of the slits 129 is formed across the entire region of the blister pack package 101 in the width direction. By forming the slits 129, the blister pack package 101 can be easily divided into a specific number of storage portions 19, and the convenience of the blister pack package 101 is improved.

The components contained in the lid material 11 and the bottom material 12 are as described above.

In a case where the lid material 11 and the bottom material 12 contain the same kind of thermoplastic resin, the blister pack package 101 has high reusability.

<Example of Package>

A preferred example of the package of the present embodiment includes a package which is a blister pack package formed by sealing a lid material and a bottom material, in which

the bottom material is a formed body of a resin film,

the resin film contains a thermoplastic resin,
a crystallite size of the thermoplastic resin is 90 Å or more,
a softening point of the resin film is 140°C or lower,
the resin film contains a propylene-based resin as the thermoplastic resin,
in the resin film, a ratio of a content of the thermoplastic resin to a total mass of the resin film is 80% by mass or more,
in the resin film, a ratio of a content of the propylene-based resin to the content of the thermoplastic resin is 80% by mass or more,
the lid material contains a thermoplastic resin,
the lid material contains a propylene-based resin as the thermoplastic resin, and
the lid material contains the same kind of the thermoplastic resin as the thermoplastic resin contained in the bottom material.

In such a package, it is preferable that the same kind of the thermoplastic resin as the thermoplastic resin contained in the bottom material, which is contained in the lid material, is the propylene-based resin.
A more preferred example of the package of the present embodiment includes a package which is a blister pack package formed by sealing a lid material and a bottom material,

the bottom material is a formed body of a resin film,
the resin film contains a thermoplastic resin,
a crystallite size of the thermoplastic resin is 90 Å or more,
a softening point of the resin film is 140°C or lower,
the resin film contains a propylene-based resin as the thermoplastic resin,
in the resin film, a ratio of a content of the thermoplastic resin to a total mass of the resin film is 80% by mass or more,
in the resin film, a ratio of a content of the propylene-based resin to the content of the thermoplastic resin is 80% by mass or more,
the lid material contains a thermoplastic resin,
the lid material contains a propylene-based resin as the thermoplastic resin,
the lid material contains the same kind of the thermoplastic resin as the thermoplastic resin contained in the bottom material,
in the bottom material, a ratio of a content of the same kind of the thermoplastic resin as the thermoplastic resin contained in the lid material to a total mass of the bottom material is 80% to 100% by mass, and
in the lid material, a ratio of a content of the same kind of the thermoplastic resin as the thermoplastic resin contained in the bottom material to a total mass of the lid material is 80% to 100% by mass.

In such a package, it is preferable that the same kind of the thermoplastic resin as the thermoplastic resin contained in the bottom material, which is contained in the lid material, is the propylene-based resin.

<<Method of Producing Package>>

The package of the present embodiment can be produced in the same manner as in the case of a known package, except that the resin film according to the embodiment of the present invention described above is used.
For example, the package of the present embodiment can be produced by heat-sealing the resin film and the other resin film while storing a storage target, and any one or both of the resin film and the other resin film may be further formed after the production or may not be formed. Furthermore, a package having sufficiently high seal strength can be obtained even in a case where a heat sealing temperature is not excessively high.
The heat sealing temperature can be optionally selected according to the kind of the resin (thermoplastic resin) contained in the resin film and the other resin film, and is not particularly limited.
The heat sealing temperature is preferably lower than 160°C, and more preferably 155°C or lower, and may be, for example, any of 150°C or lower and 145°C or lower, from the viewpoint that the effect of the present invention that the seal strength is sufficiently high even in a case where the heat sealing temperature is not high is remarkably obtained, and the effect of suppressing the occurrence of a defect due to melting of the resin film or the other resin film is enhanced.
On the other hand, the heat sealing temperature is preferably 110°C or higher from the viewpoint that the seal strength is further increased.
In one embodiment, the heat sealing temperature may be, for example, any of 110°C or higher and lower than 160°C, 110°C to 155°C, 110°C to 150°C, and 110°C to 145°C. However, these are merely examples of the heat sealing temperature.
The heat sealing temperature shown here is particularly suitable, for example, in a case where the thermoplastic resins contained in the resin film and the other resin film are both propylene-based resins.

A heat sealing time can be appropriately adjusted according to the heat sealing temperature, and is not particularly limited. The heat sealing time is preferably, for example, 0.3 to 5 seconds.

A sealing pressure during the heat sealing is preferably 0.1 to 0.5 MPa.

The other resin film can be produced by using another resin or another resin composition as a forming material thereof. The other resin or the other resin composition is the same as the resin or the resin composition as the forming material of the resin film described above, except that the kinds and the contents of the contained components may be different. In addition, the other resin film can be produced in the same manner as in the case of the resin film, except that the other resin or the other resin composition is used instead of the resin or the resin composition.

In a case of forming the other resin film, the other resin film can be formed in the same manner as in the case of the resin film.

Among packages, a blister pack package can be produced using a known PTP packaging machine. More specifically, for example, a bottom material is produced by forming a recess portion (protruding portion) serving as a storage portion in the resin film by plug forming, air-assisted plug forming, pressure forming, plug-assisted pressure forming, vacuum forming, or the like. Then, the storage portion of the bottom material is filled with a storage target, and the lid material and the bottom material are heat-sealed to obtain a blister pack package.

In a case where a slit (for example, a slit 129 in a case of the bottom material 12 shown in FIGS. 2 and 3) is to be provided in the bottom material, the slit can be formed in the bottom material by a known method using a perforation blade, a half-cut blade, or the like.

## Examples

Hereinafter, the present invention will be described in more detail with reference to specific examples. However, the present invention is not intended to be limited to the following Examples.

Resins used in each of examples and comparative examples are as follows.

hPP: Homopolypropylene ("Sumitomo Noblen (registered trademark) FS2011DG2" manufactured by Sumitomo Chemical Co., Ltd., melting point: 158°C, melt flow rate (230°C): 2.5 g/10 min)

rPP (1): Polypropylene random copolymer (propylene-ethylene binary copolymer, "J242WB" manufactured by Prime Polymer Co., Ltd., melting point: 140°C, melt flow rate (230°C): 1.3 g/10 min)

rPP (2): Polypropylene random copolymer (propylene-ethylene binary copolymer, "X7080" manufactured by Mitsui Chemicals, Inc., melting point: 83°C, melt flow rate (230°C): 7 g/10 min)

### [Example 1]

<<Production of Resin Film for Bottom material>>

<Production of Resin Composition>

A resin composition (1) was produced by mixing the hPP (10 parts by mass) and the rPP (1) (90 parts by mass) at room temperature.

<Production of Resin Film for Bottom material>

A non-stretched long resin film for a bottom material (thickness: 300 μm) was produced by extrusion-molding the resin composition (1).

<Evaluation of Resin Film for Bottom material>

Using an X-ray diffractometer ("Ultima IV" manufactured by Rigaku Corporation), X-ray diffraction measurement was performed on the resin film for a bottom material obtained above under the following measurement conditions. Then, the crystallite size was calculated based on the Scherrer equation described above. The results are shown in Table 1.

(Measurement conditions)

Radiation source: CuKα

Tube voltage: 40 kV

Tube current: 40 mA
Measurement range: 5° ≤ 2θ ≤ 40°
Scanning axis: 2θ/θ
Measurement method: FT
Counting unit: Counts
Step width: 0.01°
Count time: 3 seconds
Divergence slit: 2/3°
Divergence vertical limiting slit: 10 mm
Scattering slit: 2/3°
Receiving slit: 0.5 mm
Monochromator receiving slit: 0.5 mm

<<Production of Blister Pack Package>>

A bottom material was prepared by forming a large number of recess portions in the long resin film for a bottom material obtained above under the following forming conditions.

(Forming Conditions)

Forming die: Lens-shaped, size (opening diameter): φ10, pocket depth: 5.0 mm
Heating plate: Pinpoint heating plate
Heating plate temperature: 138°C
Plug temperature: 20°C
Forming blow pressure: 0.45 MPa

As a resin film for a lid material, a long biaxially stretched polypropylene random copolymer (rPP) film ("FOH-L" manufactured by Futamura Chemical Co., Ltd., thickness: 25 μm) was prepared. A melting point of the rPP contained in the resin film for a lid material was 166°C.
The bottom material obtained above and the resin film for a lid material were heat-sealed under conditions of a sealing temperature of 140°C, a sealing time of 0.5 seconds, and a sealing pressure of 0.45 MPa (4.6 $kgf/cm^2$). In this case, a surface of the bottom material on a side where the recess portions were open was sealed with the resin film for a lid material.
As described above, a blister pack package in which a large number of recess portions of the bottom material were sealed with the lid material was produced.

<<Evaluation of Resin Film for Bottom material>>

<Measurement of Softening Point>

For the resin film for a bottom material obtained above, a softening point was measured under the following conditions using a thermomechanical analyzer ("TMA7100" manufactured by Hitachi High-Tech Corporation). The results are shown in Table 1.

(Measurement Conditions)

Measurement mode: Penetration mode
Tip diameter of TMA penetration probe: 1 mm
Measurement temperature range: 25°C to 200°C
Temperature rising rate: 5°C/min

<Evaluation of Seal Strength (1) (Measurement of Peel Strength)>

The resin film for a bottom material obtained above and the resin film for a lid material were heat-sealed under

conditions of a sealing temperature of 140°C, a sealing time of 0.5 seconds, and a sealing pressure of 0.45 MPa (4.6 $kgf/cm^2$) using an automatic cup sealer ("EPK-Semi-Automatic OLL" manufactured by Eshin Pack Ind. Co., Ltd.).

A test piece having a width of 15 mm was cut out from the obtained sealed body.

Using a tensile tester ("TENSILON RTG-1310" manufactured by AD Company, Limited), the resin film for a lid material was peeled off from the resin film for a bottom material at a peeling speed of 200 mm/min such that sealing surfaces of the resin film for a bottom material and the resin film for a lid material formed an angle of 180° in the test piece. Then, the peel strength at this time was measured. The results are shown in Table 1 in the column "Peel strength (N/15 mm) of resin film for bottom material".

<Evaluation of Seal Strength (2) (Evaluation of Adhesion between Lid Material and Bottom material)>

From the blister pack package obtained above, 16 test pieces were cut out, each having a size corresponding to 2 rows by 5 columns (a total of 10) of recess portions in the bottom material.

Water dyed with a small amount of blue dye (hereinafter, referred to as "dyed water") was poured into a water tank, leaving a gap in an upper part of the water layer. The 16 test pieces with weights were immersed in the dyed water within the water layer. Then, the water layer was sealed in this state. A connection port to which a vacuum pump for reducing the pressure in the water layer can be connected was provided in the upper part of the sealed water layer, and a pressure gauge for measuring the pressure in the water layer was further provided. After sealing, a vacuum pump was connected to the connection port, and the vacuum pump was operated to reduce the pressure in the gap in the water layer to 0.05 MPa. Then, this reduced pressure state was maintained for 10 minutes.

Next, the reduced pressure was released, the water layer was opened, and all the test pieces were pulled up from the dyed water. All of these test pieces were visually observed to check for the presence or absence of penetration of the dyed water into the recess portions, and the adhesion between the lid material and the bottom material was evaluated according to the following criteria. The results are shown in Table 1 under the column "Adhesion between lid material and bottom material in package".

[Evaluation Criteria]

A: In any of the 160 recess portions, no penetration of dyed water was observed, indicating high adhesion between the lid material and the bottom material.

B: In at least one recess portion, penetration of dyed water was observed, indicating insufficient adhesion between the lid material and the bottom material.

<<Production of Resin Film for Bottom material, Production of Blister Pack Package, and Evaluation of Resin Film for Bottom material>>

[Example 2]

A resin composition (2) was produced by mixing the hPP (20 parts by mass) and the rPP (1) (80 parts by mass) at room temperature.

Then, a resin film for bottom material (thickness: 300 μm) and a blister pack package were produced in the same manner as in the case of Example 1, except that the resin composition (2) was used instead of the resin composition (1), and the resin film for bottom material was evaluated. The results are shown in Table 1.

[Example 3]

A resin composition (3) was produced by mixing the hPP (30 parts by mass) and the rPP (1) (70 parts by mass) at room temperature.

Then, a resin film for bottom material (thickness: 300 μm) and a blister pack package were produced in the same manner as in the case of Example 1, except that the resin composition (3) was used instead of the resin composition (1), and the resin film for bottom material was evaluated. The results are shown in Table 1.

[Example 4]

A resin composition (4) was produced by mixing the hPP (40 parts by mass) and the rPP (1) (60 parts by mass) at room temperature.

Then, a resin film for bottom material (thickness: 300 μm) and a blister pack package were produced in the same manner as in the case of Example 1, except that the resin composition (4) was used instead of the resin composition (1), and the resin film for bottom material was evaluated. The results are shown in Table 1.

[Example 5]

A resin composition (5) was produced by mixing the hPP (49 parts by mass) and the rPP (1) (51 parts by mass) at room temperature.

Then, a resin film for bottom material (thickness: 300 μm) and a blister pack package were produced in the same manner as in the case of Example 1, except that the resin composition (5) was used instead of the resin composition (1), and the resin film for bottom material was evaluated. The results are shown in Table 1.

[Example 6]

A resin composition (6) was produced by mixing the hPP (10 parts by mass) and the rPP (2) (90 parts by mass) at room temperature.

Then, a resin film for bottom material (thickness: 300 μm) and a blister pack package were produced in the same manner as in the case of Example 1, except that the resin composition (6) was used instead of the resin composition (1), and the resin film for bottom material was evaluated. The results are shown in Table 1.

[Example 7]

A resin composition (7) was produced by mixing the hPP (20 parts by mass) and the rPP (2) (80 parts by mass) at room temperature.

Then, a resin film for bottom material (thickness: 300 μm) and a blister pack package were produced in the same manner as in the case of Example 1, except that the resin composition (7) was used instead of the resin composition (1), and the resin film for bottom material was evaluated. The results are shown in Table 1.

[Example 8]

A resin composition (8) was produced by mixing the hPP (30 parts by mass) and the rPP (2) (70 parts by mass) at room temperature.

Then, a resin film for bottom material (thickness: 300 μm) and a blister pack package were produced in the same manner as in the case of Example 1, except that the resin composition (8) was used instead of the resin composition (1), and the resin film for bottom material was evaluated. The results are shown in Table 2.

[Example 9]

A resin composition (9) was produced by mixing the hPP (40 parts by mass) and the rPP (2) (60 parts by mass) at room temperature.

Then, a resin film for bottom material (thickness: 300 μm) and a blister pack package were produced in the same manner as in the case of Example 1, except that the resin composition (9) was used instead of the resin composition (1), and the resin film for bottom material was evaluated. The results are shown in Table 2.

[Example 10]

A resin composition (10) was produced by mixing the hPP (49 parts by mass) and the rPP (2) (51 parts by mass) at room temperature.

Then, a resin film for bottom material (thickness: 300 μm) and a blister pack package were produced in the same manner as in the case of Example 1, except that the resin composition (10) was used instead of the resin composition (1), and the resin film for bottom material was evaluated. The results are shown in Table 2.

[Example 11]

A resin film for bottom material (thickness: 300 μm) and a blister pack package were produced in the same manner as in the case of Example 1, except that the rPP (1) was used instead of the resin composition (1), and the resin film for bottom material was evaluated. The results are shown in Table 2.

[Example 12]

A resin film for bottom material (thickness: 300 μm) and a blister pack package were produced in the same manner as in the case of Example 1, except that the rPP (2) was used instead of the resin composition (1), and the resin film for bottom material was evaluated. The results are shown in Table 2.

[Comparative Example 1]

A resin film for bottom material (thickness: 300 μm) and a blister pack were produced in the same manner as in the case of Example 1, except that the hPP was used instead of the resin composition (1), and the resin film for bottom material was evaluated. The results are shown in Table 2.

[Comparative Example 2]

A resin composition (11) was produced by mixing the hPP (75 parts by mass) and the rPP (1) (25 parts by mass) at room temperature.

Then, a resin film for bottom material (thickness: 300 μm) and a blister pack package were produced in the same manner as in the case of Example 1, except that the resin composition (11) was used instead of the resin composition (1), and the resin film for bottom material was evaluated. The results are shown in Table 2.

All the resin films for a bottom material produced in Examples 2 to 12 and Comparative Examples 1 and 2 were non-stretched resin films.

In Tables 1 and 2, the notation of "-" in the column "Contained component (content (parts by mass))" of "Resin film for bottom material" indicates that the resin film for bottom material does not contain the corresponding component.

[Table 1]

| | | | Examples | | | | | | |
|---|---|---|---|---|---|---|---|---|---|
| | | | 1 | 2 | 3 | 4 | 5 | 6 | 7 |
| Resin film for bottom material | Contained component (content (parts by mass)) | hPP | 10 | 20 | 30 | 40 | 49 | 10 | 20 |
| | | rPP (1) | 90 | 80 | 70 | 60 | 51 | - | - |
| | | rPP (2) | - | - | - | - | - | 90 | 80 |
| | Thickness (μm) | | 300 | 300 | 300 | 300 | 300 | 300 | 300 |
| Evaluation results | Crystallite size of resin (Å) | | 196 | 188 | 197 | 202 | 193 | 125 | 112 |
| | Softening point of resin film for bottom material (°C) | | 123 | 126 | 129 | 132 | 135 | 96 | 102 |
| | Peel strength of resin film for bottom material (N/15 mm) | | 9.1 | 9.7 | 8.8 | 9.0 | 7.5 | 19.5 | 23.1 |
| | Adhesion between lid material and bottom material in package | | A | A | A | A | A | A | A |

[Table 2]

| | | | Examples | | | | | Comparative Examples | |
|---|---|---|---|---|---|---|---|---|---|
| | | | 8 | 9 | 10 | 11 | 12 | 1 | 2 |
| Resin film for bottom material | Contained component (content (parts by mass)) | hPP | 30 | 40 | 49 | - | - | 100 | 75 |
| | | rPP (1) | - | - | - | 100 | - | - | 25 |
| | | rPP (2) | 70 | 60 | 51 | - | 100 | - | - |
| | Thickness (µm) | | 300 | 300 | 300 | 300 | 300 | 300 | 300 |
| Evaluation results | Crystallite size of resin (Å) | | 113 | 92 | 116 | 201 | 90 | 211 | 188 |
| | Softening point of resin film for bottom material (°C) | | 108 | 114 | 119 | 123 | 72 | 152 | 142 |
| | Peel strength of resin film for bottom material (N/15 mm) | | 21.2 | 20.3 | 19.4 | 8.8 | 19.4 | 5.6 | 6.1 |
| | Adhesion between lid material and bottom material in package | | A | A | A | A | A | B | B |

As is apparent from the above results, in Examples 1 to 12, the peel strength of the resin film for a bottom material was 7.5 N/15 mm or more (7.5 to 23.1 N/15 mm), and the seal strength was sufficiently high. In Examples 1 to 12, the adhesion between the lid material and the bottom material in the package was high, which also confirmed from this point that the seal strength was sufficiently high.

In Examples 1 to 12, the crystallite size of the thermoplastic resin contained in the resin film for a bottom material was 90 Å or more (90 to 202 Å), and the softening point of the resin film for bottom material was 135°C or lower (72°C to 135°C). Here, the thermoplastic resin was a mixture of the hPP and the rPP (1) in Examples 1 to 5, a mixture of the hPP and the rPP (2) in Examples 6 to 10, the rPP (1) in Example 11, and the rPP (2) in Example 12.

In the resin film for a bottom material, the ratio of the content of the polypropylene random copolymer to the total content of the homopolypropylene (hPP) and the polypropylene random copolymer (rPP) was 51% to 90% by mass in Examples 1 to 10, and 100% by mass in Examples 11 and 12.

Contrary to this, in Comparative Examples 1 and 2, the peel strength of the resin film for a bottom material was 6.1 N/15 mm or less (5.6 to 6.1 N/15 mm), and the seal strength was insufficient. In Comparative Examples 1 and 2, the adhesion between the lid material and the bottom material in the package was insufficient, which also confirmed from this point that the seal strength was insufficient.

In Comparative Examples 1 and 2, the crystallite size of the thermoplastic resin contained in the resin film for bottom material was 188 Å or more (188 to 211 Å), but the softening point of the resin film for bottom material was 142°C or higher (142°C to 152°C).

INDUSTRIAL APPLICABILITY

The present invention can be used to produce a blister pack package, and is particularly suitable for use in production of a blister pack package having high reusability.

REFERENCE SIGNS LIST

1 Resin film
101 Blister pack package
11 Lid material, 11a One surface (first surface) of lid material, 11b Other surface (second surface) of lid material
12 Bottom material, 12a One surface (first surface) of bottom material, 12b Other surface (second surface) of bottom material, 121 Recess portion of bottom material

19 Storage portion of blister pack package

## Claims

**1.** A resin film comprising:

a thermoplastic resin,
wherein a crystallite size of the thermoplastic resin is 90 Å or more, and
a softening point of the resin film is 140°C or lower.

**2.** The resin film according to Claim 1,
wherein the resin film contains a homopolypropylene and a polypropylene random copolymer as the thermoplastic resin.

**3.** The resin film according to Claim 2,
wherein, in the resin film, a ratio of a content of the polypropylene random copolymer to a total content of the homopolypropylene and the polypropylene random copolymer is more than 0% by mass and less than 10% by mass, or more than 50% by mass and less than 100% by mass.

**4.** The resin film according to any one of Claims 1 to 3,
wherein the resin film is used as a bottom material of a blister pack package.

**5.** A package formed using the resin film according to any one of Claims 1 to 3.

**6.** The package according to Claim 5,

wherein the package is a blister pack package formed by sealing a lid material and a bottom material,
the bottom material is a formed body of the resin film, and
the lid material contains the same kind of thermoplastic resin as the thermoplastic resin contained in the bottom material.

FIG. 1

1a
1
1b

FIG. 2

101
121
12
12a
III
129
III
11
11a

FIG. 3

121
121
12a
19
129
12b
19
12
8
11b
8
11a
11
101

**INTERNATIONAL SEARCH REPORT**

International application No. **PCT/JP2024/035249**

**A. CLASSIFICATION OF SUBJECT MATTER**

***C08J 5/18***(2006.01)i; ***B65D 75/36***(2006.01)i; ***C08L 23/12***(2006.01)i; ***C08L 23/14***(2006.01)i
FI: C08J5/18 CES; B65D75/36; C08L23/12; C08L23/14

According to International Patent Classification (IPC) or to both national classification and IPC

**B. FIELDS SEARCHED**

Minimum documentation searched (classification system followed by classification symbols)

C08J5/18; B65D75/36; C08L; C08K

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2004/106430 A1 (MITSUI CHEMICALS, INC.) 09 December 2004 (2004-12-09)<br>claims, description, page 18, line 15 to page 19, line 23, examples | 1-3, 5<br>4, 6 |
| X<br>Y | JP 2007-119747 A (SUMITOMO CHEMICAL COMPANY, LIMITED) 17 May 2007 (2007-05-17)<br>claims, paragraphs [0009], [0010], [0014], [0019], [0046], examples | 1-3, 5<br>4, 6 |
| X<br>Y | JP 2003-313378 A (SUMITOMO CHEM CO., LTD.) 06 November 2003 (2003-11-06)<br>claims, paragraphs [0002], [0010], [0028], examples | 1-3, 5<br>4, 6 |
| Y | JP 9-52313 A (DAICEL CHEM IND LTD.) 25 February 1997 (1997-02-25)<br>claims, paragraphs [0001], [0007], [0029], [0030], [0046], [0047], examples, fig. 1 | 4, 6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2024** | **24 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/035249**

**C. DOCUMENTS CONSIDERED TO BE RELEVANT**

| Category* | Citation of document, with indication, where appropriate, of the relevant passages | Relevant to claim No. |
|---|---|---|
| A | JP 2000-264981 A (SUMITOMO BAKELITE CO., LTD.) 26 September 2000 (2000-09-26) entire text | 1-6 |
| A | WO 2016/167328 A1 (OJI HOLDINGS CORPORATION) 20 October 2016 (2016-10-20) entire text | 1-6 |

Form PCT/ISA/210 (second sheet) (July 2022)

## INTERNATIONAL SEARCH REPORT
**Information on patent family members**

International application No.
**PCT/JP2024/035249**

| Patent document cited in search report | Publication date (day/month/year) | Patent family member(s) | Publication date (day/month/year) |
|---|---|---|---|
| WO 2004/106430 A1 | 09 December 2004 | US 2006/0247381 A1 claims, examples | |
| | | EP 1630197 A1 | |
| | | KR 10-2006-0009922 A | |
| | | CN 1795237 A | |
| JP 2007-119747 A | 17 May 2007 | (Family: none) | |
| JP 2003-313378 A | 06 November 2003 | (Family: none) | |
| JP 9-52313 A | 25 February 1997 | (Family: none) | |
| JP 2000-264981 A | 26 September 2000 | (Family: none) | |
| WO 2016/167328 A1 | 20 October 2016 | US 2018/0118904 A1 | |
| | | EP 3284777 A1 | |
| | | CN 107531915 A | |
| | | KR 10-2017-0137768 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023172268 A
- JP 2016124574 A